# EUROPEAN PATENT APPLICATION

(11) **EP 4 553 952 A1**
(43) Date of publication of application: **14.05.2025**
(21) Application number: 24211379.3
(22) Date of filing: 07.11.2024
(51) Int. Cl.: H01M 10/48, H01M 50/209, H01M 50/308, H01M 50/342, H01M 50/358, H01M 50/507, H01M 50/548

(54) **BATTERY MODULE**

(30) Priority: 07.11.2023 KR 20230152482
(71) Applicant: SK On Co., Ltd., Seoul 03161 (KR)
(72) Inventor: YOO, Tak Kyung, 34124 Daejeon (KR); CHOI, Yang Kyu, 34124 Daejeon (KR)
(74) Representative: Stolmár & Partner Patentanwälte PartG mbB

(57) **Abstract**

A battery module of the present disclosure includes: a plurality of battery cells each including an openable venting portion on a first surface, a bus bar assembly electrically connecting the plurality of battery cells, a cover portion covering the plurality of battery cells and including a through-hole in an area corresponding to an openable venting portion of a battery cell of the plurality of battery cells, and a cap portion covering the through-hole and detachably coupled to the cover portion.

## Description

### BACKGROUND OF THE INVENTION

### 1. Field

The present disclosure relates to a battery module. Specifically, it relates to a battery module with improved performance and stability.

### 2. Description of the Related Art

A secondary battery is a battery that is made to convert electrical energy into chemical energy and store it so that it may be reused multiple times through charging and discharging. Secondary batteries are widely used across industries due to their economical and eco-friendly characteristics. In particular, among secondary batteries, lithium secondary batteries are widely used throughout industries, including portable devices that require high-density energy.

The operating principle of lithium secondary batteries is an electrochemical oxidation-reduction reaction. In other words, the principle is that electricity is generated through the movement of lithium ions and charged in the reverse process. In the case of a lithium secondary battery, a phenomenon in which lithium ions in an anode escape therefrom and move to a cathode through an electrolyte and a separator is referred to as discharging. In addition, the opposite process of this phenomenon is referred to as charging.

A gas may be generated inside a secondary battery during the charging and discharging processes. When the gas is not discharged, it may lead to explosion of the secondary battery. Therefore, research is being actively conducted on battery structures that can efficiently discharge gases.

### SUMMARY OF THE INVENTION

A problem that the present disclosure aims to solve is to provide a battery module with improved stability and performance.

In addition, another problem that the present disclosure aims to solve is to provide a battery module capable of efficiently discharging a gas.

In addition, the present disclosure can be widely applied in the field of electric vehicles, battery charging stations, and green technology, such solar power generation, and wind power generation using batteries.

In addition, the battery cell of the present disclosure can be used in eco-friendly electric vehicles, hybrid vehicles, etc. to prevent climate change by suppressing air pollution and greenhouse gas emissions.

A battery module according to embodiments of the present disclosure includes a plurality of battery cells each including an openable venting portion on a first surface, a bus bar assembly electrically connecting the plurality of battery cells, a cover portion covering the plurality of battery cells and including a through-hole in an area corresponding to an openable venting portion of a battery cell of the plurality of battery cells, and a cap portion covering the through-hole and detachably coupled to the cover portion

The plurality of battery cells may each include a main body portion for storing and supplying electrical energy and a tab portion protruding from the main body portion, and the tab portion may protrude from a second surface different from the first surface.

The plurality of battery cells may be stacked along a first direction so that main body portions of two adjacent battery cells among the plurality of battery cells face each other and the first surface and the second surface may be perpendicular to the first direction in which the plurality of battery cells are stacked.

The cap portion may be detachably coupled to the cover portion with a snap fit.

The cap portion may include a bottom portion covering the through-hole and a supporting portion extending obliquely from an edge of the bottom portion, the cover portion may include a coupling portion formed by extending at least a part of an edge of the through-hole toward the cap portion, and the supporting portion may be coupled with the coupling portion with the snap fit.

One of the coupling portion and the supporting portion may include an engaging portion comprising a hook shape. The other of the coupling portion and the supporting portion may include an accommodating portion comprising a recessed groove or a through-hole, and the engaging portion and the accommodating portion may be coupled to each other.

The coupling portion may include an engaging portion formed on an outer surface of the cover portion. The supporting portion may include an accommodating portion formed in an area corresponding to the engaging portion, and the engaging portion and the accommodating portion may be coupled to each other.

The accommodating portion may comprise a penetration into one surface of the supporting portion.

At least one of the cap portion and the cover portion may include an elastic body.

The through-hole may be a first through-hole of a plurality of through-holes and the plurality of through-holes may be formed in a same numbers as a number of the plurality of battery cells.

The cap portion and the cover portion may be configured to separate based on a pressure of a space between the cover portion and the plurality of battery cells.

The cover portion may be detachably coupled with the bus bar assembly.

The cover portion may be coupled to the bus bar assembly with a snap fit.

The bus bar assembly may further include a bus bar electrically connecting the plurality of battery cells and a bus bar plate connected to the bus bar and supporting the bus bar, and the cover portion may be coupled to an edge of the bus bar plate.

The bus bar plate may include a fastening portion comprising a hook shape at least a part of which protrudes from the one edge in a direction in which the plurality of battery cells are positioned. The cover portion may include an extending portion extending from an edge along a direction in which the bus bar assembly is positioned, and the fastening portion may be coupled with the extending portion with the snap fit.

The battery module may further include a sensing portion for obtaining information about at least one battery cell among the plurality of battery cells, wherein the sensing portion is electrically connected to the bus bar assembly, and at least a part of the sensing portion is positioned between the plurality of battery cells and the cover portion.

The sensing portion may include a first contacting portion contacting the bus bar assembly and a second contacting portion contacting the bus bar assembly, wherein the plurality of battery cells are interposed between the first contacting portion and the second contacting portion. The sensing portion may also include a connecting portion connecting the first contacting portion and second contacting portion. The connecting portion may be positioned between the plurality of battery cells and the cover portion.

A battery cell according to embodiments of the present disclosure may include a main body portion for storing and supplying electrical energy and a tab portion protruding from the main body portion, a tab portion configured to connect to a busbar assembly and protruding from a first surface of the main body portion, and an openable venting portion on a second surface of the main body portion, wherein the openable venting portion is configured to discharge a gas generated in the battery cell.

The openable venting portion may include a smaller thickness than adjacent areas or a different material than the adjacent areas.

A battery module according to embodiments of the present disclosure may include a battery module housing configured to receive a plurality of battery cells, a cover portion configured to cover a space corresponding to the plurality of battery cells and including plurality of through-holes, and a plurality of cap portions covering the plurality of through-holes and detachably coupled to the cover portion. The plurality of cap portions and the cover portion may be configured to separate based on a pressure of the space corresponding to the plurality of battery cells.

### BRIEF DESCRIPTION OF THE DRAWINGS

FIGS. 1 and 2 schematically show a battery module according to an embodiment of the present disclosure.
FIG. 3 shows a battery cell according to an embodiment of the present disclosure.
FIG. 4 schematically shows a sensing portion and a bus bar assembly according to an embodiment of the present disclosure.
FIGS. 5 and 6 schematically show a cover portion and a cap portion according to an embodiment of the present disclosure.
FIGS. 7 and 8 show a cap portion according to an embodiment of the present disclosure.
FIGS. 9 and 10 show a cap portion according to another embodiment of the present disclosure.
FIG. 11 schematically shows a bus bar assembly and a cover portion according to an embodiment of the present disclosure.

### DETAILED DESCRIPTION

Hereinafter, the present disclosure will be described in detail with reference to the attached drawings. This is merely illustrative, and the present disclosure is not limited to the specific embodiments described in an illustrative manner.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

To explain the present disclosure, descriptions below may be based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for the purpose of explanation, so that the present disclosure may be clearly understood. The directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an embodiment that includes only a second component without a first component may also be implemented.

As used in the present specification, singular expressions include plural expressions unless the context clearly dictates otherwise.

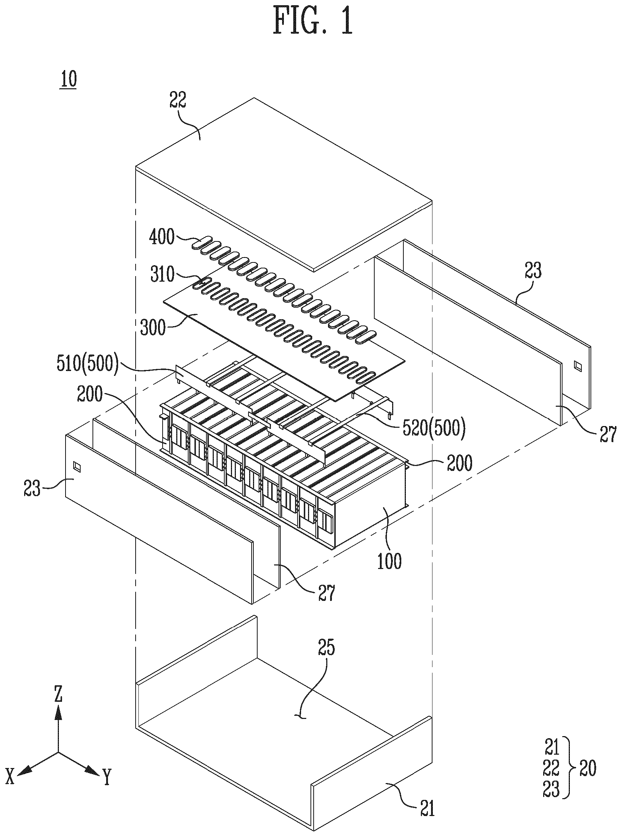

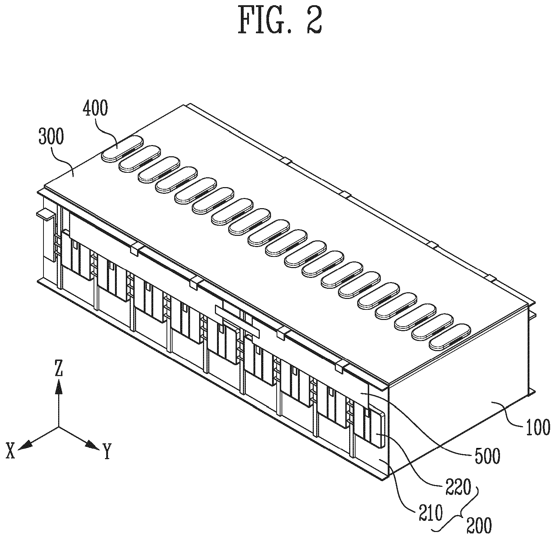

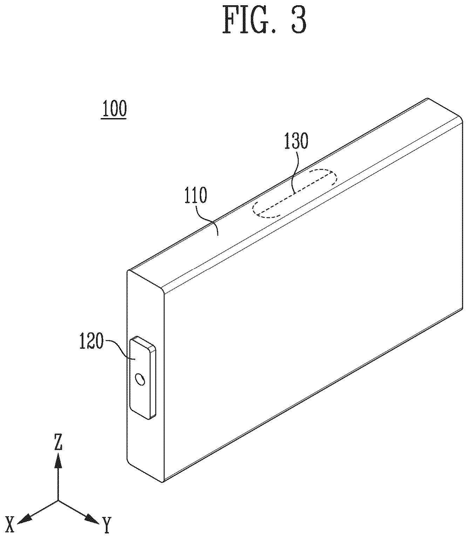

FIGS. 1 and 2 schematically show a battery module 10 according to an embodiment of the present disclosure, and FIG. 3 shows a battery cell 100 according to an embodiment of the present disclosure.

The battery cell 100 described in the present specification refers to a secondary battery that may be repeatedly used by charging and discharging electrical energy. For example, it may refer to a lithium secondary battery or a lithium ion battery, but it is not limited thereto. As another example, it may mean an all-solid-state battery.

Battery cells 100 may be classified into pouch-type secondary batteries, prismatic secondary batteries, or cylindrical secondary batteries depending on the shape. Referring to FIG. 3, in the present specification, a prismatic secondary battery is illustrated as an example for convenience of explanation, but the embodiments described herein are not limited thereto.

Meanwhile, a battery module 10 described in the present specification refers to a battery assembly in which one or more batteries 100 are grouped and placed in a case to protect the battery cells from external shock, heat, vibration, etc. and to have high output and high capacity characteristics.

Referring to FIG. 1, a battery module 10 according to the present disclosure includes: a plurality of battery cells 100 each including an openable venting portion 130 (in FIG. 3) on one surface; a bus bar assembly 200 electrically connecting the plurality of battery cells 100; a cover portion 300 covering the plurality of battery cells 100 and includes a through-hole 310 formed by opening at least one area corresponding to the venting portion 130; and a cap portion 400 covering the through-hole 310 and detachably coupled with the cover portion 300.

A plurality of battery cells 100 may be stacked along one direction. For example, referring to FIGS. 1 and 2, battery cells 100 may be stacked along the Y-direction. Through this, the energy density of a battery module 10 may be improved by including the maximum number of battery cells 100 within a certain volume of the battery module 10.

The plurality of battery cells 100 may each include a main body portion 110 storing and supplying electrical energy; and a tab portion 120 protruding from the main body portion 110. The main body portion may include a cathode and anode. A cathode may include a cathode active material which lithium ions may be inserted into and extracted from. An anode may include an anode active material which lithium ions may be inserted into and extracted from. A battery cell 100 may further include a separator to prevent an electrical short circuit between a cathode and an anode and to generate a flow of ions.

In an embodiment, a cathode, an anode, and a separator may be stacked to form an electrode assembly. Electrode assemblies can be classified into stacking type, winding type, stack-folding type, and Z-stacking type depending on the way a cathode, an anode, and a separator are stacked. A battery cell 100 of the present disclosure is not limited to any one stacking method and may include electrode assemblies stacked in various ways.

A cathode and an anode may include a current collector. A cathode may include a cathode current collector, and an anode may include an anode current collector. A current collector may contain a known conductive material to the extent that it does not cause a chemical reaction within a lithium secondary battery. For example, a current collector may include any one of stainless steel, nickel (Ni), aluminum (Al), titanium (Ti), copper (Cu), and alloys thereof, and may be provided in various forms including film, sheet, foil, and the like.

A cathode and an anode may include an active material. A cathode may include a cathode active material, and an anode may include an anode active material. A cathode active material and an anode active material may each be materials which lithium ions may be inserted into and extracted from. For example, a cathode active material may be a lithium metal oxide, and an anode active material may be any one of carbon-based materials such as crystalline carbon, amorphous carbon, carbon composite, and carbon fiber, lithium alloy, silicon (Si), and tin (Sn).

In addition, a cathode and an anode may further include a binder and a conductive material to improve mechanical stability and electrical conductivity, respectively.

A separator may be configured to prevent electrical short-circuit between a cathode and an anode and to generate a flow of ions. The type of separator is not particularly limited, but may include a porous polymer film. For example, a separator may include a porous polymer film or a porous non-woven fabric.

An electrolyte may include an electrolyte solution. An electrolyte solution may be a nonaqueous electrolyte solution. An electrolyte solution may include a lithium salt and an organic solvent. An electrolyte solution may further include an additive. An additive may form a film on a cathode or an anode through a chemical reaction inside a battery. For example, a cathode interface film can be formed on a cathode, and an anode interface film can be formed on an anode.

A tab portion 120 may be formed to protrude from a main body portion 110. A tab portion 120 may electrically connect the main body portion 110 and the outside. A tab portion 120 may include a cathode tab 120 connected to a cathode and an anode tab 120 connected to an anode.

A cathode tab 120 and an anode tab 120 may each be provided on both opposite surfaces of a main body portion 110. For example, referring to FIG. 3, a cathode tab 120 may be provided on one surface of a main body portion 110, and an anode tab 120 may be provided on the other surface opposite to the one surface.

A battery cell 100 may include an openable venting portion 130 on one surface. A venting portion 130 may discharge a gas inside a battery cell 100 to the outside. A venting portion 130 may be formed in one area of a battery cell 100, and the interior of the battery cell 100 and the exterior of the battery cell 100 may be communicated with each other by the venting portion 130. In other words, a gas may be discharged to the outside of a battery cell 100 through a venting portion 130.

When a gas is not discharged from a battery cell 100 and remains inside the battery cell 100, the internal pressure of the battery cell 100 increases, which may lead to an explosion or fire of the battery cell 100. Therefore, a venting portion 130 needs to be formed on one surface of a battery cell 100 to efficiently discharge a gas.

In an embodiment, a venting portion 130 may be opened when the internal pressure of a battery cell 100 increases. In other words, a battery cell 100 immediately after being manufactured may have a venting portion 130 closed. A battery cell 100 may be repeatedly used while being charged and discharged, and the internal pressure of the battery cell 100 may increase due to a gas generated in this process. When the internal pressure reaches a critical point that a venting portion 130 is unable to withstand, the venting portion 130 may be opened and a gas may be discharged.

In order for a venting portion 130 to be opened, the venting portion 130 may be formed to have relatively weak rigidity compared to adjacent areas. For example, the thickness of a venting portion 130 may be thinner than the thickness of adjacent areas, or the venting portion 130 and the adjacent areas may be made of different materials. Alternatively, a groove may be formed on a venting portion 130. Responding sensitively to the pressure due to a groove, a venting portion may be opened more easily than adjacent areas. A venting portion 130 may not limited to the above-described content and may be formed by a known method or have a known configuration.

In an embodiment, a venting portion 130 may be positioned in a main body portion 110. A venting portion 130 may be formed on the outer surface of a main body portion 110. A venting portion 130 may be positioned on a surface different from one surface of the main body potion 110 where the tab portion 120 is positioned.

A plurality of battery cells 100 may be stacked along one direction so that main body portions 110 of two adjacent battery cells 100 face each other. A venting portion 130 and a tab portion 120 may be each positioned on one surface of the plurality of battery cells 100, which is formed perpendicular to a direction in which the plurality of battery cells 100 are stacked.

In other words, a venting portion 130 and a tab portion 120 may be formed on different surface of a battery cell 100. In addition, a surface on which a venting portion 130 is formed and a surface on which a tab portion 120 is formed may be formed to be perpendicular to each other. Preferably, battery cells 100 may be stacked so that a venting portion 130 included in each of the plurality of battery cells 100 faces upward.

For example, referring to FIGS. 1 to 3, battery cells 100 may be stacked along the Y-direction so that main body portions 110 face each other. At this time, a venting portion 130 and a tab portion 120 may be formed on one surface of the main body portions 110 facing the X-direction and Z-directions, which are perpendicular to the stacking direction, respectively.

Ultimately, when a plurality of battery cells 100 are stacked, a tab portion 120 formed on the plurality of battery cells 100 may face the +X-direction and the -X-direction, and a venting portion 130 may face the +Z-direction.

A battery module 10 of the present disclosure may further include a module housing 20 accommodating a plurality of battery cells 100. A module housing 20 may protect a plurality of battery cells 100 from external shock, heat, or pressure. To this end, a module housing 20 may include a material with high rigidity.

A module housing 20 may include a supporting body 21. A supporting body 21 may support a plurality of battery cells 100. A supporting body 21 may provide an accommodation space for supporting a plurality of battery cells 100. In an embodiment, an accommodating space may formed on the supporting body 21, and a plurality of battery cells 100 may be positioned in the accommodating space.

Both opposing edges of a supporting body 21 may be bent. A supporting body 21 may support lower surfaces of a plurality of battery cells 100 to cover the lower surfaces and both side surfaces of the plurality of battery cells 100, and it may be bent in a direction in which the plurality of battery cells 100 are positioned.

Ultimately, a supporting body 21 may have an opening 25 that is open upward due to the bent shape thereof, and a plurality of battery cells 100 may be inserted into the opening 25 and accommodated in the supporting body 21.

A module housing 20 may further include a cover body 22. A cover body 22 may cover a plurality of battery cells 100. A cover body 22 may be coupled with a supporting body 21 to form one side surface of an accommodating space. A supporting body 21 and a cover body 22 may be coupled to form a hexahedral shape with open front and rear surfaces. Referring to FIG. 1, a module housing 20 may be formed in a hexahedral shape with open surfaces facing the +X-direction and -X-direction, and it may accommodate a plurality of battery cells 100 therein.

A module housing 20 may further include an end cover 23. An end cover 23 may close front and rear surfaces of a module housing 20. In other words, a module housing 20 may be coupled with a supporting body 21, a cover body 22, and an end cover 23, there by stably accommodating a plurality of battery cells 100 therein and protecting them from the outside.

In another embodiment, a module housing 20 may include only supporting bodies 21 positioned on both sides of the plurality of battery cells 100 along a direction in which the battery cells 100 are stacked (e.g., Y-direction). In other words, the supporting bodies 21 may extend along a direction in which each tab portion protrudes (e.g., the X-direction) and may each be positioned on both sides of the plurality of battery cells.

When the exterior material of a battery cell is made of a material with high rigidity, the battery cell may be protected from external shock or pressure, so the energy density of a battery module may be improved by minimizing the module housing.

A module housing 20 is not limited to the above description and may be manufactured by a known method or a known configuration may be applied thereto.

Meanwhile, a battery module may further include an insulating cover 27. An insulating cover may be made of an insulating material to prevent unintentional electrical connection between a battery cell and the outside. Specifically, an insulating cover 27 may cover each tab portion 120 of a plurality of battery cells. In an embodiment, an insulating cover 27 may be positioned on a surface on which a tab portion of a battery cell is positioned. An insulating cover 27 may be positioned on the outside of a bus bar assembly.

A bus bar assembly 200 may electrically connect a plurality of battery cells 100. A plurality of battery cells 100 may be electrically connected to each other in series and/or parallel. To this end, a bus bar assembly 200 may contact with a tab portion 120 of each of a plurality of battery cells 100.

A bus bar assembly 200 may further include a bus bar 220 electrically connecting a plurality of battery cells 100 and a bus bar plate 210 connected to the bus bar 220 and supporting the bus bar 220. A bus bar plate 210 may extend along a direction in which a plurality of battery cells 100 are stacked. A bus bar plate 210 may be formed of an insulating material.

A bus bar 220 may be coupled with a bus bar plate 210. There may be a plurality of bus bars 220. A plurality of bus bars 220 may each be connected to a battery cell 100 assembly in which a plurality of battery cells 100 are grouped in a preset number. Through this, a plurality of battery cells 100 may be electrically connected in series and/or parallel.

In addition, a plurality of bus bars 220 may be spaced apart at regular intervals so as not to contact with each other and may each be coupled with a bus bar plate 210. Ultimately, referring to FIG. 1, a bus bar plate 210 may extend along the Y-direction, and a plurality of bus bars 220 may each be coupled to a bus bar plate 210 along the Y-direction.

One surface of a bus bar plate 210 may face a plurality of battery cells 100, and a plurality of bus bars 220 may be coupled with the other surface opposite to the one surface.

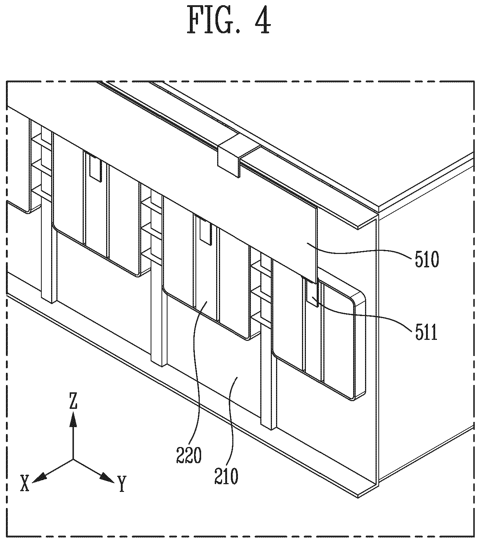

FIG. 4 schematically shows a sensing portion 500 and a bus bar assembly 200 according to an embodiment of the present disclosure.

A battery module 10 of the present disclosure may further include a sensing portion 500. A sensing portion 500 may obtain information about at least one battery cell 100 among a plurality of battery cells 100. Information about a battery cell 100 may mean electrical information about the battery cell 100. For example, information on a battery cell 100 may be the voltage, current, and state of charge of the battery cell 100.

A battery module 10 of the present disclosure may further include a control portion (not shown). A control portion may control a battery cell 100 based on information about the battery cell 100. A control portion may control a battery cell 100 to maximize the performance of the battery module 10 and use the same efficiently. For example, a control portion may control charging and discharging of a battery cell 100 or adjust a voltage difference between battery cells 100 through cell balancing.

In an embodiment, a control portion may control a battery module 10 based on information obtained from a sensing portion 500. A control portion may be a battery management system.

Meanwhile, a sensing portion 500 may be electrically connected to a bus bar assembly 200 to obtain information about a battery cell 100. In an embodiment, a sensing portion 500 may be connected to each of a plurality of battery cells 100. To this end, the sensing portion 500 may include a plurality of sensors 511 disposed along a direction in which a bus bar plate 210 extends.

In addition, at least a part of a sensing portion 500 may be positioned between a plurality of battery cells 100 and a cover portion 300. Through this, the sensing portions 500 in contact with each of an anode tab 120 and a cathode tab 120 may be connected to each other.

Specifically, referring to FIG. 1, a sensing portion 500 may include two contacting portions 510 interposing a plurality of battery cells 100 therebetween and contacting with a bus bar assembly 200 and a connecting portion connecting the two contacting portions 510.

Two bus bar assemblies 200 may be provided to contact with each of a cathode tab 120 and an anode tab 120 of a plurality of battery cells 100. Likewise, two contacting portions 510 may be provided to contact with each of two bus bar assemblies 200. Each contacting portion 510 may extend along the Y-direction.

Referring to FIG. 4, a contacting portion 510 may extend along the Y-direction and be positioned on the top of a bus bar plate 210. A contacting portion 510 may further include a sensor 511 to be connected to a bus bar 220. A plurality of sensors 511 may be provided to be connected to a plurality of bus bars 220.

A connecting portion 520 may connect two contacting portions 510. A connecting portion 520 may be positioned between a plurality of battery cells 100 and a cover portion 300. A connecting portion 520 may be a flexible plastic circuit board. A connecting portion 520 may extend along the longitudinal direction of a battery cell 100. Referring to FIGS. 1 and 2, a connecting portion 520 may cover an upper surface of a plurality of battery cells 100 and may extend along the X-direction.

One end of a connecting portion 520 may be connected to one of two contacting portions 510, and the other end may be connected to the one remaining contacting portion 510. In the present specification, a connecting portion 520 and two contacting portions 510 are described as distinct components, but a connecting portion 520 and two contacting portions 510 may be one integrated component.

A connecting portion 520 may be connected to a control portion. In an embodiment, a control portion may be mounted on a connecting portion 520 or a connector (not shown) for connecting to a control portion may be mounted. Through this, information about a plurality of battery cells 100 may be transmitted to a control portion, and the control unit may control the plurality of battery cells 100.

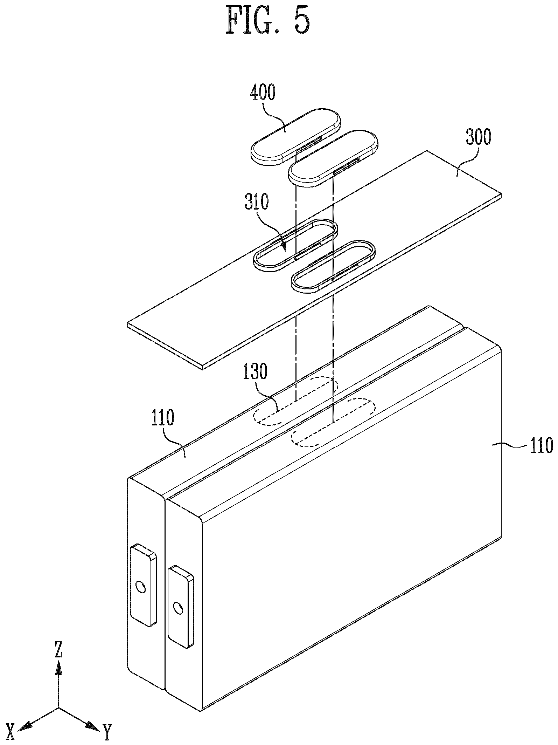

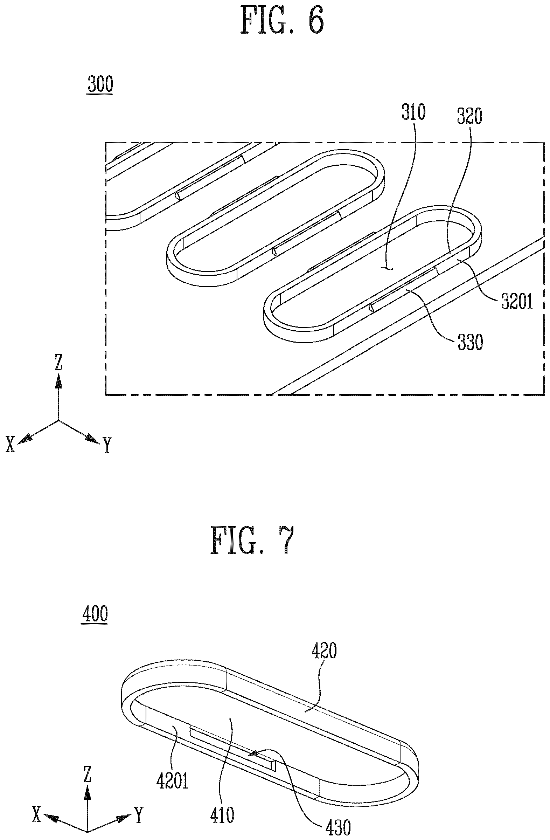

FIGS. 5 and 6 schematically show a cover portion 300 and a cap portion 400 according to an embodiment of the present disclosure.

A cover portion 300 covers a plurality of battery cells 100 and includes a through-hole 310 formed by opening at least one of areas corresponding to a venting portion 130. A cover portion 300 may cover an upper surface of a plurality of battery cells 100. A cover portion 300 may cover one surface of a battery cell 100 where a venting portion 130 is positioned. A cover portion 300 may be formed of an insulating material.

Referring to FIGS. 5 and 6, an area of a cover portion 300 corresponding to a venting portion 130 may be penetrated. For example, an area of a cover portion 300 corresponding to a venting portion 130 may be penetrated along the Z-direction.

A cover portion 300 may include a through-hole 310 formed through one area. A through-hole 310 may be formed in a circular, oval, polygonal shape, or a combination thereof. A gas discharged from a venting portion 130 may move through the through-hole 310. A through-hole 310 may prevent unintentional opening of a venting portion 130. When there is no through-hole 310, a gas discharged from a venting portion 130 may be reflected by a cover portion 300 and pressurize an adjacent venting hole. However, a battery module 10 of the present disclosure is provided with a through-hole 310 in a cover portion 300 to prevent unintentional opening of a venting hole.

A cover portion 300 may have a plurality of through-holes 310. Preferably, through-holes 310 may be formed in the same number as the number of battery cells 100. Through this, a gas discharged from each battery cell 100 may be effectively discharged through a through-hole 310 of a cover portion 300.

A cap portion 400 may cover a through-hole 310 and may be detachably coupled with a cover portion 300. A through-hole 310 may be covered by a cap portion 400. A cap portion 400 may prevent damage to a venting portion 130 due to external shock or pressure.

A cap portion 400 and a cover portion 300 may be separated based on the pressure of a space between the cover portion 300 and a plurality of battery cells 100. After a venting portion 130 is opened, a gas may remain in the space between the cover portion 300 and a plurality of battery cells 100. When the amount of the remaining gas increases, the pressure in the space may gradually increase, and when the critical pressure at which the cap portion 400 is opened is exceeded, the cap portion 400 may be separated from the cover portion 300.

In an embodiment, the cap portion 400 may be coupled with a cover portion 300 through a snap fit. Through this, a cap portion 400 and a cover portion 300 may be repeatedly coupled and separated without damage.

A cover portion 300 may include a coupling portion 320 formed by extending at least a part of an edge of a through-hole 310 toward a cap portion 400. Preferably, a coupling portion 320 may be formed along the whole edge of a through-hole 310.

A cap portion 400 may include a bottom portion 410 covering a through-hole 310 and a supporting portion 420 extending from an edge of the bottom portion 410 obliquely to the bottom portion 410. A supporting portion 420 and a bottom portion 410 may be perpendicularly connected. Although a supporting portion 420 and a bottom portion 410 are described as separate components, they can be manufactured as an integrated component by an injection molding method.

At least one of a cap portion 400 and a cover portion 300 may include an elastic body. A cap portion 400 and a cover portion 300 may be deformed within an elastic limit at which damage, such as breaking or cutting, occurs. Through this, a cap portion 400 and a cover portion 300 may be detachably coupled without damage.

A supporting portion 420 may be coupled with a coupling portion 320 with a snap fit. A cap portion 400 may be moved in a direction to cover a through-hole 310, and a supporting portion 420 may cover an outer surface 3201 of a coupling portion 320.

In an embodiment, one of a coupling portion 320 and a supporting portion 420 may include an engaging portion 330 of a hook shape formed on one surface, and the other may include an engaging portion 330 of a hook shape may include an accommodating portion 430 at least a part of one surface of which is formed as a recessed groove or a through-hole to fasten the engaging portion 330. An engaging portion 330 and an accommodating portion 430 may be coupled with each other and connected.

An accommodating portion 430 may be provided at a position corresponding to an engaging portion 330. When a cap portion 400 and a cover portion 300 are coupled, an engaging portion 330 and an accommodating portion 430 need to be formed at positions facing each other so that the cap portion 400 and the cover portion 300 may be connected.

In other words, an engaging portion 330 of a hook shape may be formed on at least one of a coupling portion 320 and a supporting portion 420 to couple them with each other. Engaging portions 330 formed on each of a supporting portion 420 or a coupling portion 320 may protrude toward each other, and an accommodating portion 430 may be recessed inward. Through this, an engaging portion 330 of a hook shape may be coupled with an accommodating portion 430.

In an embodiment, a coupling portion 320 may include an engaging portion 330 of a hook shape formed on an outer surface 3201, and a supporting portion 420 may include an accommodating portion 430 that is formed to correspond to the engaging portion 330. At this time, the engaging portion 330 and the accommodating portion 430 may be coupled with each other.

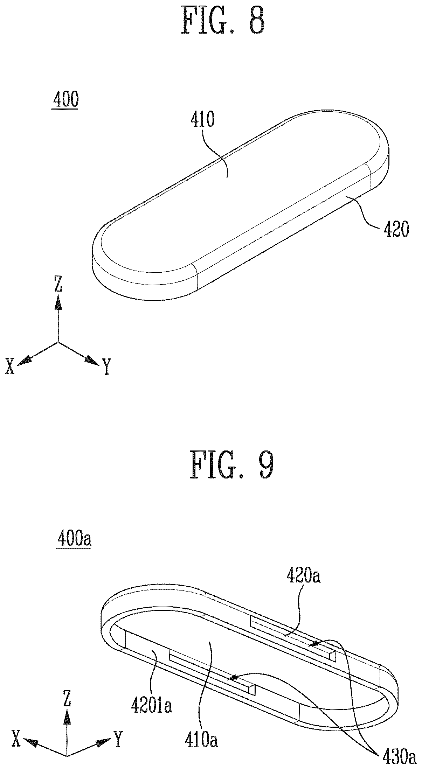

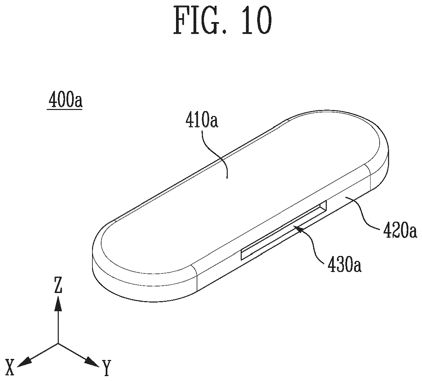

FIGS. 7 and 8 show a cap portion according to an embodiment of the present disclosure, and FIGS. 9 and 10 show a cap portion according to another embodiment of the present disclosure.

Referring to FIGS. 7 and 8, an accommodating portion 430 may be formed as at least a part of one surface of the supporting portion 420 is recessed. In an embodiment, a supporting portion 420 may include an inner surface 4201 provided to face a cover portion 300, and a part of the inner surface 4201 may be recessed. A part of an inner surface 4201 may be recessed and provided in the form of a groove, or may be provided in a stepped form.

Specifically, FIG. 7 shows a cap portion 400 viewed from the bottom, and FIG. 8 shows the cap portion 400 viewed from the top. Referring to FIGS. 7 and 8, an inner surface 4201 of a supporting portion 420 according to an embodiment of the present disclosure may be recessed to be formed in a groove shape. A plurality of grooves may be provided. A groove may be recessed to a certain depth or more so that an engaging portion 330 of a hook shape may be fixed. Preferably, grooves may be provided on both surfaces of an inner surface 4201 to face each other.

Meanwhile, FIG. 9 shows a cap portion 400a viewed from the bottom according to another embodiment, and FIG. 10 shows the cap portion 400a viewed from the top. Referring to FIGS. 9 and 10, an accommodating portion 430a may be formed by penetrating one surface of a supporting portion 420a. A supporting portion 420a may extend from an edge of a bottom portion 410a toward a coupling portion 320. An accommodating portion 430a may be formed to penetrate an inner surface 4201a and an outer surface of a supporting portion 420a.

An engaging portion 330 of a hook shape may penetrate an accommodating portion 430a so that a supporting portion 420a and a coupling portion 320 are stably connected.

The method of coupling a cover portion 300 and a cap portion 400 is not limited to a snap fit method, and they may be coupled by a known method that allows detachment without damage. In addition, a cover portion 300 and a cap portion 400 may be formed in a known detachable configuration.

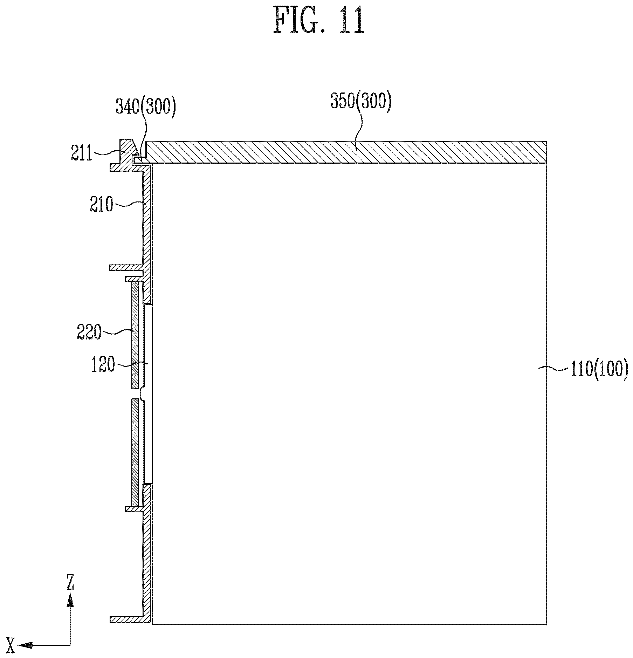

FIG. 11 schematically shows a bus bar assembly 200 and a cover portion 300 according to an embodiment of the present disclosure.

A cover portion 300 according to an embodiment of the present disclosure may be detachably coupled with a bus bar assembly 200. Referring to FIGS. 1 and 11, a bus bar assembly 200 may be positioned on both side surfaces of a plurality of battery cells 100 along the longitudinal direction, and a cover portion 300 may cover an upper portion of a plurality of battery cells 100. Both edges of a cover portion 300 may each be connected to a bus bar assembly 200. In other words, a cover portion 300 may be coupled with one edge of a bus bar plate 210.

A cover portion 300 and a bus bar assembly 200 may be detachably coupled so that they may be easily and quickly separated without damage to each other. Operations such as welding and adhesive application may be omitted, thereby improving manufacturing efficiency. They may be easily separated even when replacing components after a battery module 10 is completed.

In an embodiment, a cover portion 300 may be coupled with a bus bar assembly 200 with a snap fit. A bus bar plate 210 may include a fastening portion 211 of a hook shape at least a part of which protrudes from one edge in a direction in which a plurality of battery cells 100 are positioned. A cover portion 300 may include an extending portion 340 extending from an edge along a direction in which a bus bar assembly 200 is positioned. A fastening portion 211 may be coupled with an extending portion 340 with a snap fit so that a cover portion 300 and a bus bar assembly 200 are connected.

Referring to FIG. 11, a fastening portion 211 of a hook shape may be formed on an upper portion of a bus bar assembly 200. Fastening portions 211 may be formed in a plural number. A plurality of fastening portions 211 may be disposed at preset intervals along a direction in which a bus bar plate 210 extends. Through this, the stability of the coupling of a cover portion 300 and a bus bar plate 210 may be improved.

An extending portion 340 may extend along the length of a cover portion 300 from both edges opposing along the length of the cover portion 300. Specifically, a cover portion 300 may further include a body portion 350. A body portion 350 may be an area covering a plurality of battery cells 100, and as described above, a through-hole may be formed in a body portion 350, and a coupling portion may be formed. An extending portion 340 may be an area extending from an edge of a body portion 350 for connection to a fastening portion 211.

A body portion 350 may be provided in a flat plate shape. An extending portion 340 may be formed to have a thinner thickness than a body portion 350. This is to be inserted into an engaging portion 330 of a hook shape. In the present specification, a body portion 350 and an extending portion 340 are described as having different and separate structures, but in other embodiments, a body portion 350 and an extending portion 340 may be formed as an integrated component.

The present disclosure may be modified and implemented in various forms, and its scope is not limited to the above-described embodiments. The content described above is merely an example of applying the principles of the present disclosure, and other features may be further included without departing from the scope of embodiments according to the present disclosure.

## Claims

1. A battery module comprising:
a plurality of battery cells each including an openable venting portion on a first surface;
a bus bar assembly electrically connecting the plurality of battery cells;
a cover portion covering the plurality of battery cells and including a through-hole in an area corresponding to an openable venting portion of a battery cell of the plurality of battery cells; and
a cap portion covering the through-hole and detachably coupled to the cover portion.

2. The battery module according to claim 1, wherein each battery cell of the plurality of battery cells includes a main body portion for storing and supplying electrical energy and a tab portion protruding from the main body portion; and
the tab portion protrudes from a second surface different from the first surface.

3. The battery module according to claim 2, wherein the plurality of battery cells are stacked along a first direction so that main body portions of two adjacent battery cells among the plurality of battery cells face each other; and
the first surface and the second surface are perpendicular to the first direction in which the plurality of battery cells are stacked.

4. The battery module according to any of claim 1 to claim 3, wherein the cap portion is detachably coupled to the cover portion with a snap fit.

5. The battery module according to any of claim 1 to claim 4, wherein the cap portion includes a bottom portion covering the through-hole and a supporting portion extending obliquely from an edge of the bottom portion;
the cover portion includes a coupling portion formed by extending at least a part of an edge of the through-hole toward the cap portion; and
the supporting portion is coupled with the coupling portion with the snap fit.

6. The battery module according to claim 5, wherein one of the coupling portion and the supporting portion includes an engaging portion comprising a hook shape;
the other of the coupling portion and the supporting portion includes an accommodating portion comprising a recessed groove or a through-hole; and
the engaging portion and the accommodating portion are coupled to each other.

7. The battery module according to claim 5 or claim 6, wherein the coupling portion includes the engaging portion and the engaging portion is formed on an outer surface of the cover portion;
the supporting portion includes the accommodating portion and the accommodating portion is formed in an area corresponding to the engaging portion;
and the engaging portion and the accommodating portion are coupled to each other.

8. The battery module according to claim 7, wherein the accommodating portion comprises a penetration into one surface of the supporting portion.

9. The battery module according to any of claim 5 to claim 8, wherein at least one of the cap portion and the cover portion includes an elastic body.

10. The battery module according to any of claim 1 to claim 9, wherein the cover portion is detachably coupled to the bus bar assembly.

11. The battery module according to claim 10, wherein the cover portion is detachably coupled to the bus bar assembly with a snap fit.

12. The battery module according to claim 10, wherein the bus bar assembly further includes a bus bar electrically connecting the plurality of battery cells and a bus bar plate connected to the bus bar and supporting the bus bar; and
the cover portion is coupled to an edge of the bus bar plate.

13. The battery module according to claim 12, wherein the bus bar plate includes a fastening portion comprising a hook shape at least a part of which protrudes from the one edge in a direction in which the plurality of battery cells are positioned,
the cover portion includes an extending portion extending from an edge along a direction in which the bus bar assembly is positioned, and
the fastening portion is coupled with the extending portion with the snap fit.

14. The battery module according to any of claim 1 to claim 13, further comprising a sensing portion for obtaining information about at least one battery cell among the plurality of battery cells,
wherein the sensing portion is electrically connected to the bus bar assembly, and at least a part of the sensing portion is positioned between the plurality of battery cells and the cover portion.

15. The battery module according to claim 14, wherein the sensing portion comprises:
a first contacting portion contacting the bus bar assembly and a second contacting portion contacting the bus bar assembly, wherein the plurality of battery cells are interposed between the first contacting portion and the second contacting portion; and
a connecting portion connecting the first contacting portion and second contacting portion, and the connecting portion is positioned between the plurality of battery cells and the cover portion.
